# EUROPEAN PATENT APPLICATION

(11) **EP 4 660 661 A1**
(43) Date of publication of application: **10.12.2025**
(21) Application number: 24180198.4
(22) Date of filing: 05.06.2024
(51) Int. Cl.: G01S 7/02, G01S 7/03, G01S 13/931, H01Q 1/32, H01Q 1/42

(54) **LICENSE PLATE RADAR SYSTEM**

(71) Applicant: Aptiv Technologies AG, 8200 Schaffhausen (CH)
(72) Inventor: VOLLBRACHT, Dennis, 8200 Schaffhausen (CH); KAZIMI, Sadam Hussain, 8200 Schaffhausen (CH); GHASEMIAN, Pedram, 8200 Schaffhausen (CH); BUSCH, Mathias, 8200 Schaffhausen (CH)
(74) Representative: Bardehle Pagenberg Partnerschaft mbB Patentanwälte Rechtsanwälte

(57) **Abstract**

The present disclosure relates to a license plate radar system for automotive application. The license plate radar system comprises a support structure, a license plate film, and a radar antenna. The present disclosure further relates to a vehicle comprising such a license plate radar system.

## Description

### Technical area

The present disclosure generally relates to a license plate radar system for automotive application, as well as to a vehicle comprising such a license plate radar system.

### Technical background

Radar sensors are used in automotive applications (e.g. in motor vehicles such as cars) to provide safety and comfort functions, for example in so-called Advanced Driver-Assistance Systems (ADAS). Recent developments are pushing radar systems to provide high-quality and reliable data which are used by a vehicle's control systems to analyze the environment of the car, to detect possible targets in the vehicle's surrounding, and to take appropriate control measures if necessary.

Front radar sensors, i.e. radar sensors installed in a front part of an automotive vehicle, are usually designed to have very high gain and high resolution at long distances such that they can be used for adaptive cruise control, automatic emergency braking, direction of arrival estimation, lane-changing and/or lang-keeping assistance. Front radar sensors are typically installed behind the front bumper of a vehicle, or in the front vehicle fascia. This can negatively the aerodynamic and aesthetic properties of the vehicle. To increase performance of ADAS, radar sensors with larger physical apertures are desired which achieve higher angular resolution. However, such radar sensors are difficult to fit into front vehicle bumpers or into the front vehicle fascia.

Radar sensors in automotive applications are usually integrated in the outer shell of a vehicle, where they are covered by radomes/bumpers/fascia. The varying material properties of the elements covering the radar sensors can massively influence the radar signal quality and can have a massive negative impact on radar detection performance and accuracy. Also, the radar signal may be attenuated by several dB, which can reduce the overall detection distance of the ADAS. Further, the material properties of molded plastic parts and semi-metallic surface coatings are often heterogeneous, which can lead to unpredictable signal distortions, such as phase distortions of the received signal.

It is thus an object of the present disclosure to provide for an improved radar system for automotive applications, particularly to provide for a radar system for automotive applications with increased angular resolution.

Prior art reference JPH11160426A discloses a car radar fitted at the rear of a license plate. However, an improved radar system is desired which reduces manufacturing costs and facilitates integration into a vehicle. In addition, improved integration of a front radar system is desired.

A solution is provided according to the subject matter of the independent claims.

### Summary of the invention

An aspect of the present disclosure relates to a license plate radar system for automotive application. The license plate radar system may be used to provide for driver-assistance functionality, e.g. as part of an ADAS.

The license plate radar system comprises a support structure. The support structure may be an integral part of the vehicle's fascia, or may be a separate component which can be mounted to the vehicle's fascia. The support structure (and or a surface thereof) may be configured for supporting one or more further elements of the license plate radar system as described further below.

The license plate radar system further comprises a license plate film adhering to the support structure. The license plate film may comprise several individual layers as described herein. The license plate film may adhere to a surface of the support structure, for example. The license plate film may have a two-dimensional area meeting the size criteria according to national regulations. For example, the license plate film may have a length of 52 cm and a height of 11 cm according to DIN 74069. The license plate film may adhere to the support structure by means of an adhesive. The license plate film may be a sticker which is sticked on the support structure. The license plate film may replace a commonly used aluminum or rigid plastic license plate. Preferably, the license plate film is a flexible film, compared to commonly used aluminum or rigid plastic license plates.

Acrylic adhesives (strong, durable, resistant to e.g. UV light and moisture), rubber-based adhesives (good initial tack, flexible), silicon-based adhesives (high-temperature resistance, good adhesion to low-energy surfaces), and/or water-based adhesives (eco-friendly, less aggressive than solvent-based adhesives) may be used to adhere the license plate film to the support structure.

The license plate film comprises a retroreflective layer configured to reflect visible light. The retroreflective layer may be configured such that the license plate system meets regional license plate reflectivity standards. Any suitable retroreflective layer may be chosen, providing the desired reflectivity characteristics.

The license plate radar system further comprises a radar antenna. The radar antenna may comprise a two-dimensional area which may be rectangular and which may be an antenna channel placement board. The radar antenna may comprise several individual (receiving and transmitting) channels as will be appreciated by the person skilled in the art. The radar antenna may be coupled to a respective control unit and may be configured for performing radar measurements, e.g. in the context driver-assistance functionality.

The license plate film at least partially covers the radar antenna. In other words, the radar antenna is provided behind the license plate film and at least part of the radar signals emitted by the radar antenna pass through the license plate film. Preferably, the dimensions of the radar antenna are such that it corresponds to the size of the license plate film. The relatively large size of the license plate film allows for providing a relatively large radar antenna. This allows for achieving improved, sub degree level resolution. For example, due to the large aperture which results from the relatively large area for placing the antenna channels, a 3dB resolution of 0,2° in azimuth and 0,9° in elevation can be achieved. A high performance (sub-degree resolution) radar antenna can be provided behind the relatively large license plate film.

The inventors have found that this license plate radar system provide for low attenuations and phase jumps for the radar characteristics, since the license plate film is relatively thin and its impact on the radar performance is neglectable. A high performance (sub-degree resolution) radar antenna with universal dimensions (e.g. 305 mm × 110 mm) can be used (e.g. mounted on the car's outer shell/bumper/fascia via a holder), and on top of this radar antenna the license plate film with specific dimensions according to national regulations (e.g. 520 mm × 110 mm according to DIN 74069) can be applied. Using a radar antenna with universal dimensions provides for cost advantage.

Preferably, the retroreflective layer comprises a prismatic structured layer. The micro-prismatic structured layer may be a metallized layer with a surface structured with reflective prismatic elements. The prismatic structured layer provides for reflection of incident light to provide for the required reflectivity of the license plate radar system.

Preferably, the retroreflective layer comprises a layer of glass beads. The glass beads may be arranged in a plane, preferably with a high packing factor. The glass beads may have the same diameter (with minor variation due to manufacturing imprecisions). The glass beads may have an average diameter in the range of 20-70 µm, preferably, 30-60 µm, further preferred 40-50 µm. The reflection of light in the glass bead provides for the required reflectivity of the license plate radar system.

Preferably, the license plate film comprises an adhesive layer configured for providing an adhering function for adhering the license plate to the support structure. By means of the adhesive layer, the whole planar license plate film may be attached to the support structure. The adhesive layer may comprise any suitable adhesive as will be appreciated by the person skilled in the art in order to provide for the desired adhering function. The provision of an adhesive layer provides for simple preparation of the license plate radar system, as the license plate film only needs to be placed on the support structure.

Preferably, the adhesive layer is a heat sensitive adhesive layer configured for releasing its adhering function when a heat threshold is reached. If desired, an operator may apply heat to the system (e.g. by a heater) such that the adhering function is reduced or even cancelled. As a result, the license plate film can be removed from the support structure, for example to replace it with another license plate film.

The heat sensitive adhesive layer may comprise one or more of the following: thermoplastic polyurethane (flexible, durable, good adhesion to fabrics and other substrates when activated by heat), polyethylene and ethylene vinyl acetate copolymers (low melting points, good adhesion properties when heated), polyester adhesives (high heat resistance, strong bonding to various substates), hot melt adhesives (quick setting, high bond strength).

Preferably, the license plate film comprises a structured metallized layer supporting the retroreflective layer. The structured metallized layer may be the prismatic structured layer as described herein, or may support the glass beads as described herein. The structured metallized layer may further enhance the reflectivity of the license plate radar system. The structured metallized layer is not necessarily fully metallized, but may be metallized only at distinct areas in order to allow for the radar waves to pass through the film.

The structured metallized layer may comprise one or more of the following materials:
Aluminum: Providing for high reflectivity in the visible and ultraviolet ranges, being cost-effective, lightweight, and excellent adhesion to many substrates. Aluminum may be deposited by means of physical vapor deposition, sputtering, and electron beam evaporation.
Silver: Providing for highest reflectivity of all metals in the visible range and good reflectivity in the infrared range. Silver has a superior reflectivity and good conductivity. Silver may be deposited by means of sputtering, thermal evaporation, and chemical vapor deposition.
Gold: Provides for excellent reflectivity in the infrared range and good in the visible range. Gold provides for corrosion resistance, stability, and good conductivity, and can be deposited by means of sputtering, thermal evaporation, and electroplating.
Chromium: Providing for moderate reflectivity, but provides for good adhesion to substrates, corrosion resistance, and can be deposited by means of sputtering and PVD.
Nickel: Provides for moderate reflectivity, and corrosion resistance, hardness, and good adhesion properties. Nickel can be deposited by means of electroplating, sputtering, and PVD.

Preferably, the license plate film comprises a radar transparent metamaterial layer configured to allow transmission of millimeter radar waves emitted by the radar antenna. A metamaterial may be any material engineered to have the desired property. The metamaterial may be made from assemblies of multiple elements fashioned from composite materials such as metals and plastics. These materials may be arranged in repeating patterns, at scales that are smaller than the wavelengths of the radar radiation. This may further increase the accuracy of the radar functionality.

Preferably, the license plate film comprises a transparent protective layer covering the retroreflective layer. Such a transparent layer may not or only marginally affect visible light or radar radiation, and may protect the retroreflective layer against possible environmental influences.

The transparent protective layer may comprise one or more of:
Polyurethane: Provides for excellent abrasion resistance, flexibility, and transparency. It provides a strong protective barrier that can withstand various environmental factors such as UV radiation, moisture, and physical wear and tear.
Acrylic: Acrylic coatings are also beneficial due to their UV resistance and clarity. They form a hard, durable surface that protects the underlying reflective layer from scratches, chemicals, and weathering.
Polyethylene Terephthalate: Such films are beneficial for their strength, transparency, and resistance to environmental factors. They provide a tough, protective layer that can endure exposure to sunlight, moisture, and temperature variations.
Such transparent protective layers provide for UV protection (they block or reduce the penetration of ultraviolet rays, preventing degradation of the reflective material), serve as a moisture barrier (they protect against water and humidity, which can otherwise lead to the delamination or corrosion of the reflective layer), and provide for physical protection (they shield the reflective layer from scratches, abrasions, and impacts, maintaining its reflective properties and appearance), as well as chemical resistance (they offer protection against various chemicals and pollutants that could damage or discolor the reflective material).

The license plate film may have a thickness of 50-300 µm, preferably 100-200 µm. Such license plate films are sufficiently thick to provide for the required reflectivity, but are sufficiently thin to only marginally affect the functionality of the radar system.

Preferably, the system further comprises characters printed on the license plate film. The characters may be specific to the respective registration, as will be appreciated by the person skilled in the art. Printing the characters on the license plate film is cost efficient while still providing for good visibility of the characters.

Preferably, the license plate film has a two-dimensional extension with a length of between 190 and 520 mm and a height of between 80 and 220 mm. The dimensions of the license plate film may correspond to national regulations. The area of the license plate film is sufficiently large to allow for positioning a high performance (sub-degree resolution) radar antenna behind the license plate film.

Preferably, the radar antenna operates at 77 to 81 GHz, and/or in the 120 GHz band. This radar frequency is particularly advantageous for ADAS applications as will be appreciated by the skilled person. In the 77-78 GHz frequency range, the radar antenna may provide for common (front) radar applications, while the 77 to 81 GHz frequency range may be used for street condition monitoring and for parking applications. The structure and composition of the license plate film may be chosen in view of the radar antenna operating frequency.

Preferably, the radar antenna has a two-dimensional area with a length of between 190 and 520 mm and a height of between 80 and 220 mm. Due to the proposed dimensions of the radar antenna, the radar antenna may be used together with various license plate film dimensions (US license plates have a standard license plate size of about 305×152 mm, license plates in the PR China have a size of 440×140 mm, and license plates in Australia and other pacific rim countries have size of about 372×135 mm).

Preferably, the support structure is an integral part of the radar antenna. Accordingly, the radar antenna may have a two-dimensional surface sufficiently large and adapted for placing the license plate film thereon. This reduces the number of separate components.

A further aspect of the present disclosure relates to a vehicle comprising a license plate radar system as described herein. The vehicle may be any vehicle. Preferably, the vehicle is a motor vehicle such as a car, truck, or bus. The license plate radar system may constitute a (front or read) part of the vehicle. The license plate radar system may serve to indicate the vehicle registration (as is done with conventional license plates), and may at the same time provide for improved radar functionality as it allows for the application of a high performance (sub-degree resolution) radar antenna.

### Description of preferred embodiments

In the following, preferred embodiments will be described with reference to the accompanying figures. In the figures, similar elements are provided with the same reference signs.
- Fig. 1: illustrates a vehicle with a license plate radar system according to an embodiment of the disclosure;
- Fig. 2: illustrates the structure of a license plate film according to another embodiment of the disclosure;
- Fig. 3: illustrates the structure of a license plate film according to another embodiment of the disclosure;
- Fig. 4: illustrates the structure of a license plate film according to another embodiment of the disclosure;
- Fig. 5: illustrates the components of a license plate radar system according to another embodiment of the disclosure;
- Fig. 6: illustrates the components of a license plate radar system according to another embodiment of the disclosure.

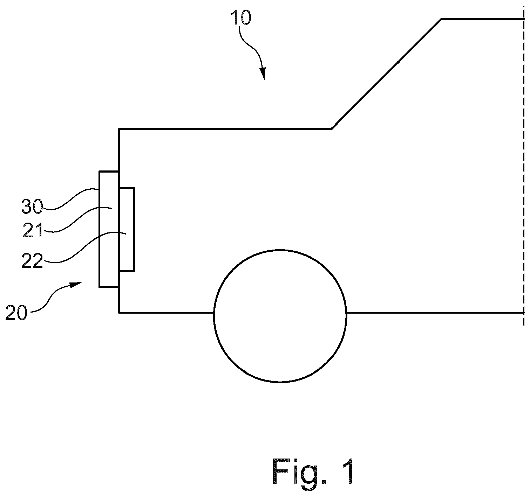

Fig. 1 illustrates a vehicle 10 according to an embodiment of the present disclosure. The vehicle 10 may be any type of vehicle, for example a passenger car. The vehicle comprises a license plate radar system 20 at the vehicle's front. The license plate radar system 20 comprises a license plate film 21 and a radar antenna 22. Further, characters 30 are printed on the license plate film 21 to represent the registration of the vehicle 10.

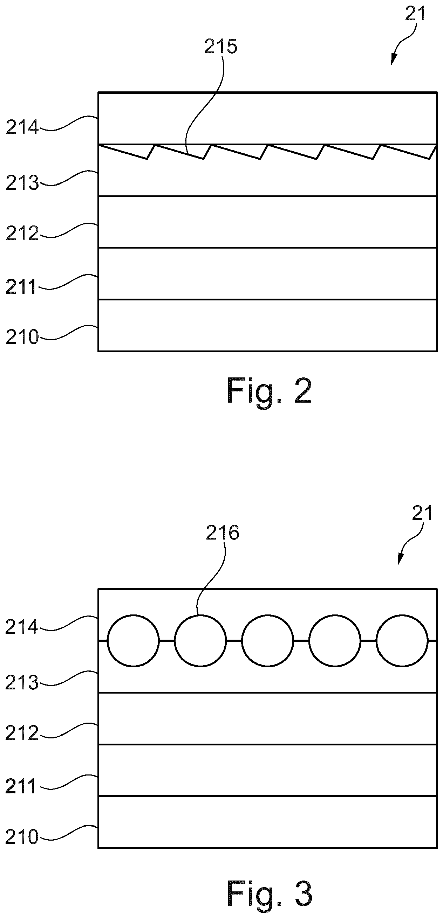

Fig. 2 illustrates the structure of a license plate film 21 according to another embodiment of the present disclosure, for example of the license plate film 21 of Fig. 1. The bottom of the license plate film, i.e. layer 210, may face a radar antenna. The license plate film 21 comprises a liner layer 210, which may serve as a backing component of the license plate film 21. On top of the liner layer 210, a release layer 211 is provided. On top of the release layer 211, an adhesive layer 212 is provided. On top of the adhesive layer 212, a structured metallized layer 213 is provided. On top of the metallized layer 213, a transparent protective layer 214 is provided.

In the embodiment of Fig. 2, the metallized layer 213 is structured such that its upper surface (facing away from the radar antenna) has a prismatic structure 215. The prismatic structure 215 has improved reflective characteristics, such that incident light is reflected by the license plate film 21.

Fig. 3 illustrates the structure of a license plate film 21 according to another embodiment of the present disclosure, for example of the license plate film 21 of Fig. 1. Again, bottom of the license plate film, i.e. layer 210, may face a radar antenna. As described with regard to the embodiment of Fig. 2, the license plate film 21 comprises a liner layer 210, a release layer 211, an adhesive layer 212, a structured metallized layer 213, and a transparent protective layer 214.

In the embodiment of Fig. 3, the metallized layer 213 is structured such that it supports glass beads (216) having an average diameter of 40 µm. At the interfaces of the glass beads, incident light is reflected as appreciated by the person skilled in the art.

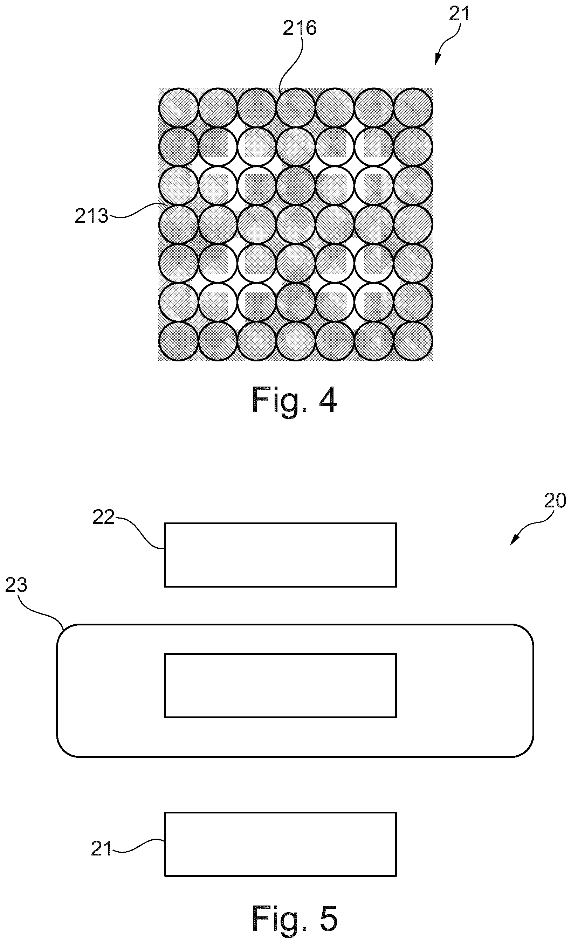

Fig. 4 illustrates the structure of a license plate film 21 according to another embodiment of the present disclosure. Here, a top view onto the film is shown. The license plate film 21 may correspond to that of Fig. 3. Several glass beads 216 are arranged on a plane to provide for the desired areal reflection characteristics of the license plate film 21. Adjacent to the glass beads, a metallized layer 213 (shaded grey in Fig. 4) is provided. As can be seen, the metallized layer 213 does not need to cover the entire area of the license plate film 21. Instead, the metallized layer 213 may have recesses as shown in Fig. 4. This may provide for low-pass, high-pass, band-pass, notch filter, polarization filter, or any other such characteristics for the radar functionality. Due to the structuring of the metallized layer 213, the metallized layer 213 may be considered as a metamaterial layer. It may act as a FSS (frequency selective surface) meta-surface, fulfilling the metallization requirement for retro-reflectivity and making the film 21 transparent for certain bands of radar waves. The skilled person understands that also other FSS structures than that shown in Fig. 4 may be used.

Fig. 5 illustrates components of a license plate radar system 20 according to another embodiment of the disclosure. The system 20 comprises a radar antenna 22, e.g. a high performance antenna providing for sub-degree resolution. Further, a part of the vehicle's bumper 23 has a cut sized to accommodate the radar antenna 22. Further, a license plate film 21 is provided which can be sticked or adhered onto the radar antenna 22 accommodated within the bumper cut.

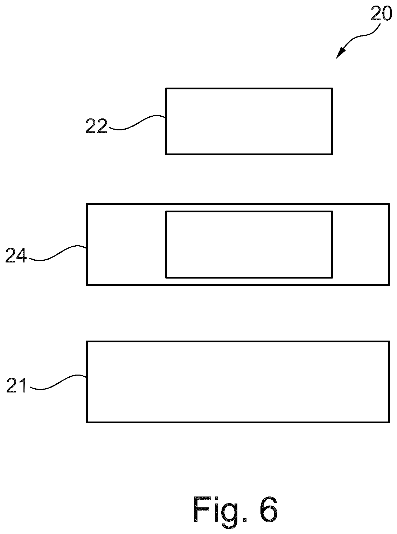

Fig. 6 illustrates components of a license plate radar system 20 according to another embodiment of the disclosure. The system 20 comprises a radar antenna 22 having a universal dimension of 305 mm × 110 mm. Further, a bracket or holder 24 is provided, via which the radar antenna 22 is mounted to the vehicle's outer shell or fascia. On top of the radar antenna 22 and holder 24, a license plate film 21 is applied. The license plate film 21 has a size according to respective national regulations, e.g. 520 mm × 110 mm according to DIN 74069.

Providing a radar antenna together with a license plate film ("license sticker") having a retroreflective provides for an improved radar system for automotive applications. Due to its thin size the license plate film only marginally affects the functionality of the radar antenna. This can be further boosted by an advanced design of the license plate film (e.g. structuring of an metallized layer). The area behind the license plate film is sufficiently large such that a large scale radar antenna can be placed there, which may feature several antenna channels to provide for different radar application. The radar antenna may make use of a variety of suitable frequency bands, given the respective application (e.g. street condition monitoring, parking applications, etc.).

## Claims

1. A license plate radar system (20) for automotive application, comprising:
a support structure,
a license plate film (21) adhering to the support structure,
wherein the license plate film (21) comprises a retroreflective layer configured to reflect visible light,
the system (20) further comprising a radar antenna (22),
wherein the license plate film (21) at least partially covers the radar antenna (22).

2. The system (20) of claim 1, wherein the retroreflective layer comprises a prismatic structured layer.

3. The system (20) of claim 1 or 2, wherein the retroreflective layer comprises a layer of glass beads (216).

4. The system (20) of any one of the preceding claims, wherein the license plate film (21) comprises an adhesive layer (212) configured for providing an adhering function for adhering the license plate to the support structure.

5. The system (20) of claim 4, wherein the adhesive layer (212) is a heat sensitive adhesive layer configured for releasing its adhering function when a heat threshold is reached.

6. The system (20) of any one of the preceding claims, wherein the license plate film (21) comprises a structured metallized layer (213).

7. The system (20) of any one of the preceding claims, wherein the license plate film (21) comprises a radar transparent metamaterial layer configured to allow transmission of millimeter radar waves emitted by the radar antenna (22).

8. The system (20) of any one of the preceding claims, wherein the license plate film (21) comprises a transparent protective layer (214) covering the retroreflective layer.

9. The system (20) of any one of the preceding claims, wherein the license plate film (21) has a thickness of 50-300 µm, preferably of 100-200 µm.

10. The system (20) of any one of the preceding claims, comprising characters (30) printed on the license plate film (21).

11. The system (20) of any one of the preceding claims, wherein the license plate film (21) has a two-dimensional extension with a length of between 190 and 520 mm and a height of between 80 and 220 mm.

12. The system (20) of any one of the preceding claims, wherein the radar antenna (22) operates at 77 to 81 GHz, and/or at 120 GHz.

13. The system (20) of any one of the preceding claims, wherein the radar antenna (22) has a two-dimensional area with a length of between 190 and 520 mm and a height of between 80 and 220 mm.

14. The system (20) of any one of the preceding claims, wherein the support structure is an integral part of the radar antenna (22).

15. A vehicle (10) comprising a license plate radar system (20) according to any one of the preceding claims.
